(19) Europäisches Patentamt / European Patent Office / Office européen des brevets

(11) **EP 2 975 799 A1**

(12) **EUROPÄISCHE PATENTANMELDUNG**

(43) Veröffentlichungstag:
**20.01.2016 Patentblatt 2016/03**

(51) Int Cl.:
**H04L 9/32** $^{(2006.01)}$

(21) Anmeldenummer: **15002040.2**

(22) Anmeldetag: **07.07.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **14.07.2014 DE 102014010455**

(71) Anmelder: **Giesecke & Devrient GmbH
81677 München (DE)**

(72) Erfinder: **Urian, Rainer
86157 Augsburg (DE)**

(54) **DATENSPARSAME AUTHENTISIERUNG**

(57) Die Erfindung schafft ein Verfahren zur Authentisierung eines elektronischen Authentisierungstokens (10) gegenüber einem Prüfsystem (20). Jedes Authentisierungstoken enthält Datengruppen und einen individuellen geheimen kryptographischen Parameter (x1). Die Datengruppen werden in veröffentlichte (D) und geheimgehaltene (U) Datengruppen aufgeteilt. Die veröffentlichten Datengruppen werden an das Prüfsystem (20) übertragen. Die Datengruppen (DG1, ...DGn) werden mittels eines Zero-Knowledge-Beweises authentisiert werden, ohne dass die geheimgehaltenen Datengruppen selbst oder Information, die Rückschlüsse auf die Datengruppen ermöglicht, an das Prüfsystem (20) übertragen werden. Der öffentliche kryptographische Parameter (y) ist für eine Mehrzahl von Authentisierungstoken identisch, so dass innerhalb der Mehrzahl von Authentisierungstoken, Authentisierungstoken, die identische veröffentlichte Datengruppen enthalten, für das Prüfsystem (20) voneinander ununterscheidbar sind.

Fig. 2

**Beschreibung**

Die Erfindung betrifft ein Verfahren zur datensparsamen Authentisierung eines Authentisierungstokens gegenüber einem Prüfsystem.

Authentisierungstoken in unterschiedlichen Bauformen werden verwendet, um, im allgemeinsten Fall, eine Berechtigung eines Nutzers gegenüber einem Prüfsystem nachzuweisen und hierdurch den Nutzer gegenüber dem Prüfsystem zu authentisieren.

Ein Authentisierungstoken umfasst zumindest einen elektronischen Speicher, in dem, in einer oder mehrere Datengruppe/n, zu einer Authentisierung verwendbare Authentisierungsdaten gespeichert sind, sowie eine Schnittstelle zum Zugreifen auf die Datengruppe/n.

Als Authentisierungstoken im Sinn der Erfindung anzusehen sind elektronische Ausweisdokumente wie elektronische Personalausweise und elektronische Reisepässe. Ein elektronisches Ausweisdokument enthält einen Chip, in dem Ausweisdaten in Datengruppen elektronisch abgespeichert sind, und eine - in der Regel kontaktlose - Schnittstelle (mit Spule bzw. Antenne) zur Kontaktierung des Chips.

Ein weiteres Beispiel für ein Authentisierungstoken ist ein kartenförmiges oder volumiges Hardware-Zugriffstoken, mit dem sich ein Nutzer zum Zugriff auf einen Computer anmeldet. Ein kartenförmiges Zugriffstoken wird für die Authentisierung mittels eines Kartenlesers mit dem Computer in Datenaustauschverbindung gebracht. Ein volumiges Zugriffstoken wird für die Authentisierung z.B. über eine Datenschnittstelle wie z.B. USB-Schnittstelle mit dem Computer in Datenaustauschverbindung gebracht.

Ein anderes Beispiel für ein Authentisierungstoken ist ein Software-Token, das die zur Authentisierung vorgesehene/n Datengruppe/n enthält. Wahlweise ist das Software-Token in einer gesicherten Laufzeitumgebung vorgesehen.

Geteilte Laufzeitumgebungen mit einer normalen und einer gesicherten Laufzeitumgebung sind beispielsweise von der Firma ARM bekannt und für Mobilfunkgeräte durch die Global Platform Organisation beschrieben.

Das deutsche Bundesamt für Sicherheit in der Informationstechnik listet als deutsche elektronische Ausweisdokumente beispielsweise den neuen Personalausweis nPA, den elektronischen Reisepass ePass und den elektronischen Aufenthaltstitel.

Beim neuen Personalausweis nPA werden, wenn die Ausweisdaten im Chip des Personalausweises durch ein Prüfsystem auf Echtheit überprüft werden, die Ausweisdaten über einen kryptographisch abgesicherten Secure Messaging (SM) Kanal vom Chip zum Prüfsystem übertragen. Der Secure Messaging Kanal wird über einen ephemeral-statischen Diffie-Hellman Algorithmus hergestellt. Hierfür muss im Chip des Personalausweises ein geheimer privater Schlüssel (Private Key) PrK eines asymmetrischen Kryptosystems abgespeichert sein. Ein solcher privater Schlüssel könnte ausgespäht werden und verwendet werden um nPAs zu klonen. Dabei ist es auch nicht möglich, echte von geklonten nPAs zu unterscheiden. Beim nPA ist der private Schlüssel als Gruppenschlüssel gestaltet, der für eine Gruppe von nPAs identisch ist, so dass Ausspähen eines Schlüssels, gelänge es denn, die ganze Gruppe beträfe, und nicht nur ein einzelner Ausweis.

Ein zusätzlicher Nachteil eines solchen privaten Gruppenschlüssels ist, dass im Fall, dass der private Gruppenschlüssel missbräuchlich bekannt wird, nur die ganze Gruppe von nPA gesperrt werden kann, nicht aber ein einzelner nPA.

Ein weiterer Nachteil des nPA ist, dass die Authentisierung zwingend einen Secure-Messaging Kanal zwischen nPA und Verifizierungsterminal benötigt.

Im von der ICAO (International Civil Aviation Organization) herausgegebenen und ständig weiterentwickelten Dokument ICAO Doc 9303 "Machine Readable Travel Document (MRTD)" sind weltweit einzuhaltende Vorgaben für elektronische Ausweisdokumente spezifiziert.

Die im Chip des Ausweisdokuments gemäß ICAO Doc 9303 gespeicherten Ausweisdaten, die zur Authentisierung des Ausweisdokuments gegenüber einem Prüfsystem vorgesehen sind, sind in einer Mehrzahl von Datengruppen DGi organisiert. Die auf die Datengruppen verteilten Ausweisdaten umfassen z.B. die Daten der maschinenlesbaren Zone MRZ (z.B. Name und Geburtsdatum des Halters des Ausweisdokuments), biometrische Daten wie Fingerabdruck und Gesichtsbild, sowie kryptographische Schlüssel.

Die vom BSI herausgegebene und ständig weiterentwickelte technische Richtlinie TR-03110, "Advanced Security Mechanisms for Machine Readable Travel Documents" beschreibt in Kap. 1.1 als Verfahren zur Authentisierung eines elektronischen Ausweisdokuments gegenüber einem Prüfsystem die passive Authentisierung (passive Authentication PA), das für den elektronische Reisepass verwendet wird.

TR-03110 geht bei der passiven Authentisierung von einem Ausweisdokument wie dem in ICAO Doc 9303 spezifizierten "Machine Readable Travel Document (MRTD)" aus. Insbesondere nimmt TR-03110, Kap. 1.1, für die passive Authentisierung Bezug auf ein Ausweisdokument gemäß ICAO Doc 9303. Das Ausweisdokument enthält sechzehn (16) Datengruppen DG1-DG16 und eine Signatur, mittels deren Verifizierung die Datengruppen auf Authentizität (Echtheit und Unverfälschtheit) überprüfbar sind.

Die Datengruppen mit den individuellen Ausweisdaten eines einzelnen Ausweisdokuments werden im Rahmen der (elektronischen) Personalisierung durch einen sogenannten Identitätsprovider (Identity Provider IdP; in BSI TR-03110 genannt der "Document Signer") im Chip des Ausweisdokuments abgespeichert. Bei der Personalisierung wird zudem die Signatur für die Authentisierung der Datengruppen im Chip abgespeichert.

Bei der Authentisierung der Ausweisdaten durch passive Authentisierung werden durch das Prüfsystem zu verifizierende Datengruppen (bzw. für nicht direkt auslesbare Datengruppen wie z.B. Fingerabdrücke die Hashwerte über die Datengruppen) ausgelesen. Die Integrität der ausgelesenen Datengruppen wird durch Verifizierung der Signatur überprüft.

Zur Verifizierung der Signatur ist Information über alle Datengruppen erforderlich ist, und zwar entweder die Inhalte der Datengruppe selbst oder zumindest der Hashwert über die Datengruppe.

Daher werden bei der Authentisierung stets alle Datengruppen DG1-DG16 oder zumindest die Hashwerte über die Datengruppen aus dem Chip ausgelesen, auch wenn nur ein Teil oder nur eine einzige der Datengruppen zu prüfen ist, beispielsweise nur das Alter des Ausweisinhabers, nicht aber seine Adresse.

Das Auslesen nicht zu verifizierender Datengruppen oder Hashwerte über Datengruppen steht im Widerspruch zur Vorgabe der Datensparsamkeit, derzufolge nur diejenigen Daten ausgelesen werden sollen, die verifiziert werden (müssen).

Andererseits wäre es vorteilhaft, sicherzustellen, dass auch die nicht zu prüfenden Datengruppen unverfälscht sind. Sonst könnte beispielsweise ein Ausweisdokument ohne Name und Adresse zum Altersnachweis verwendet werden. Dies wäre unerwünscht..

Sind nur einzelne Datengruppen zu verifizieren, beispielsweise das Alter, kann das Auslesen anderer Datengruppen wie z.B. Name und Adresse weiter dazu führen, dass der Nutzer anhand seiner Authentisierungsvorgänge verfolgbar wird. Prinzipiell hat der Nutzer in solchen Fällen einen Anspruch auf Anonymität und Nichtverfolgbarkeit.

In EP 0 384 475 B1 beschreibt Schnorr die nach ihm benannte Schnorr-Signatur, die auf kryptographischen Hashfunktionen und dem diskreten Logarithmus Problem beruht.

Bender et al. beschreiben im Fachartikel "Domain-Specific Pseudonymous Signatures for the German Identity Card", J. Bender, Ö. Dagdelen, M. Fischlin, D. Kügler, http//eprint.iacr.org/2012/558 das Prinzip der pseudonymen Signaturen. Der Grundgedanke dabei ist, dass für ein zu authentisierendes Token, im Vergleich zu einer normalen Signatur, zusätzlich ein Pseudonym des Tokens als zu verifizierender Parameter berechnet wird, und dass bei der Authentisierung das Pseudonym zusätzlich zu den sonstigen Parametern verifiziert wird. An Hand des Pseudonyms lassen sich einzelne Token sperren und wieder entsperren.

Die Firma Microsoft bietet unter der Bezeichnung U-Prove ein anonymes Authentisierungsverfahren mittels eines Authentisierungstokens an, das mehrere Datengruppen enthält, und bei welchem Verfahren ein Nutzer nur manche Datengruppen zur Authentisierung offenlegt, andere hingegen geheimhält. Indem der Nutzer für jeden Authentisierungsvorgang ein neu zu erzeugendes Authentisierungstoken anfordert, wird bei jedem Authentisierungsvorgang ein anderes Verifizierungsergebnis erzeugt. Hierdurch bleibt der Nutzer anonym. Allerdings muss für jede Authentisierung ein neues Authentisierungstoken erzeugt werden.

Der Erfindung liegt die Aufgabe zu Grunde, ein Authentisierungsverfahren für ein Authentisierungstoken anzugeben, das die Nutzung verfälschter Authentisierungstoken zuverlässig verhindert und gleichzeitig die Prinzipien der Datensparsamkeit und der Nicht-Verfolgbarkeit des Nutzers wahrt.

Die Aufgabe wird gelöst durch ein Verfahren nach Anspruch 1. Vorteilhafte Ausgestaltungen der Erfindung sind in den abhängigen Ansprüchen angegeben.

Das Verfahren nach Anspruch 1 ist zur Authentisierung eines elektronischen Authentisierungstokens gegenüber einem Prüfsystem eingerichtet. Das Authentisierungstoken umfasst mehrere Datengruppen mit zur Authentisierung vorgesehenen Authentisierungsdaten und mindestens einen für jedes Authentisierungstoken individuellen geheimen kryptographische Parameter (oder Parameter-Satz, der insgesamt individuell ist) eines asymmetrischen Kryptosystems. Das Kryptosystem umfasst den geheimen kryptographischen Parameter und einen entsprechenden öffentlichen kryptographischen Parameter. Bei dem Verfahren werden

    a) die Datengruppen in veröffentlichte und geheimgehaltene Datengruppen aufgeteilt,
    b) die veröffentlichten Datengruppen an das Prüfsystem übertragen.

Erfindungsgemäß werden

    c) alle Datengruppen mittels eines Zero-Knowledge-Beweises authentisiert, ohne dass die geheimgehaltenen Datengruppen selbst oder Information, die Rückschlüsse auf die Datengruppen ermöglicht, insbesondere Hashwerte über die Datengruppen, an das Prüfsystem übertragen werden.

Da nur die veröffentlichten Datengruppen ausgelesen werden, nicht jedoch die geheimgehaltenen, ist dem Grundsatz nach das Prinzip der Datensparsamkeit noch gewahrt. Da die geheimgehaltenen Datengruppen nicht etwa außen vor bleiben, sondern ebenfalls authentisiert werden, ist andererseits sichergestellt, dass nur unverfälschte Authentisierungstoken zu einer erfolgreichen Authentisierung verwendbar sind. Der Zero-Knowledge-Beweis stellt sicher, dass die geheimgehaltenen Datengruppen geheim bleiben.

Das Verfahren zeichnet sich weiter dadurch aus, dass der öffentliche kryptographische Parameter für eine Mehrzahl von Authentisierungstoken identisch ist. Hierdurch sind, innerhalb der Mehrzahl von Authentisierungstoken, unterschiedliche Authentisierungstoken, soweit sie identische veröffentlichte Datengruppen enthalten, für das Prüfsystem voneinander ununterscheidbar. D.h. das Prüfsystem kann die Authentisierungstoken nicht anhand geheimgehaltener Datengruppen bewerten, so dass ein Verstoß gegen die Datensparsamkeit vermieden wird.

Mit anderen Worten ist der private Parameter (Schlüssel) ein individueller Parameter, der zugehörige, zur Authentisierung erforderliche öffentliche Parameter dagegen ein Gruppen-Parameter, der für alle Individuen der Gruppe, gebildet durch die Mehrzahl, identisch ist. Somit bleiben die Authentisierungstoken bei der Authentisierung anonym und nichtverfolgbar, ohne dass (wie z.B. bei U-Prove) für jeden Authentisierungsvorgang das Authentisierungstoken neu erzeugt werden müsste.

Durch die gleichzeitige Wahrung von Datensparsamkeit und Nicht-Verfolgbarkeit ist somit eine höchstmögliche Balance zwischen Anonymität des Nutzers und Wahrung der berechtigten Interessen der Seite des Prüfsystems gewährleistet.

Somit ist gemäß Anspruch 1 ein effizientes Authentisierungsverfahren für ein Authentisierungstoken geschaffen, das die Nutzung verfälschter Authentisierungstoken zuverlässig verhindert und gleichzeitig die Prinzipien der Datensparsamkeit und der Nicht-Verfolgbarkeit des Nutzers wahrt.

Beispielsweise ist als abgespeicherter Parameter ein individueller geheimer Exponent $x1$ (privater Schlüssel eines public-private Schlüsselpaars) des Authentisierungstokens abgespeichert, und vorzugsweise zudem ein weiterer geheimer Wert $x2$, der ebenfalls individuell für das Authentisierungstoken sein kann. Z.B. ist durch einen Parameter-Satz $(x1, x2)$, bei dem zumindest $x1$ individuell ist, ein individueller privater kryptographischer Parameter eines asymmetrischen Kryptosysteins gebildet.

Wahlweise wird für den Zero-Knowledge-Beweis c):

c1) durch das Authentisierungstoken unter Verwendung der Datengruppen eine Prüfsignatur berechnet,
c2) die Prüfsignatur an das Prüfsystem übertragen, und
c3) die Prüfsignatur beim Prüfsystem verifiziert.

Die Berechnung der später vom Prüfsystem zu verifizierenden Prüfsignatur wird im Authentisierungstoken selbst, in sicherer Umgebung durchgeführt. Daher können gefahrlos alle Datengruppen verwendet werden, auch die geheimgehaltenen. Aus dem Authentisierungstoken heraus, an das Prüfsystem, wird nur die Prüfsignatur übertragen, aus der keine Rückschlüsse auf die bei der Signaturerzeugung verwendeten Datengruppen möglich sind. Somit ist mittels der Prüfsignatur die Wahrung der Datensparsamkeit sichergestellt.

Zur Berechnung und Verifizierung der Prüfsignatur werden wahlweise Systemparameter eines der Prüfsignatur zu Grunde gelegten kryptographischen Systems (z.B. Gruppe, in der das Diskrete-Logarithmen-Problem schwer ist, z.B. elliptische Kurve) festgelegt, wobei für die Mehrzahl von Authentisierungstoken identische Systemparameter festgelegt werden.

Wahlweise wird in c3) die Prüfsignatur beim Prüfsystem unter Verwendung der veröffentlichten Datengruppen verifiziert. Hierdurch genügt es, dem Prüfsystem die veröffentlichten Datengruppen zur Verfügung zu stellen. Die geheimgehaltenen Datengruppen brauchen dem Prüfsystem dagegen nicht zur Verfügung gestellt zu werden.

Wahlweise ist die Prüfsignatur als (verallgemeinerte) Schnorrsignatur gestaltet. Wahlweise ist die Prüfsignatur als pseudonyme Signatur gestaltet. In allen genannten Fällen wird die Prüfsignatur ausgehend von Hashwerten über Datengruppen gebildet.

Sowohl die Schnorr-Signatur als auch die pseudonyme Signatur erlauben es nicht, aus der Signatur auf die zu ihrer Berechnung verwendeten Hashwerte oder gar die zu Grunde liegenden Datengruppen zurückzurechnen.

Die pseudonyme Signatur bietet, auf Grund der Pseudonyme, die Möglichkeit, Blacklists und Whitelists bei der Authentisierung zu berücksichtigen, wie in Bender et al. beschrieben ist. In der Blacklist werden Pseudonyme gelistet, die bei Authentisierung stets zu einer nicht erfolgreichen Authentisierung führen, unabhängig vom sonstigen Erfolg der Authentisierung. Hierdurch lassen sich mittels einer Blacklist einzelne Authentisierungstoken auf effiziente Weise selektiv sperren und wieder entsperren - letzteres, indem das Pseudonym von der Blacklist gestrichen wird. In der Whitelist werden Pseudonyme gelistet, die zur Authentisierung prinzipiell zugelassen sind.

Wahlweise ist die Signatur insbesondere als pseudonyme Signatur gestaltet, die eine oder mehrere Blacklistst oder/und Whitelists berücksichtigt.

Um die Authentisierung der geheimgehaltenen Datengruppen zu veranlassen sendet das Prüfsystem wahlweise an das Authentisierungstoken ein "Nonce", z.B. eine Zufallszahl, im Folgenden genannt Challenge-Zufallszahl. Das Authentisierungstoken empfängt die vom Prüfsystem gesendete Challenge-Zufallszahl. Das Authentisierungstoken berechnet in Reaktion auf das Empfangen der Challenge-Zufallszahl die Prüfsignatur und sendet die berechnete Prüfsignatur an das Prüfsystem. Die Authentisierung der geheimgehaltenen Datengruppen ist somit bei dieser Ausführungsform nach dem Challenge-Response Prinzip aufgebaut, mit der (Challenge-) Zufallszahl als Challenge und der Prüfsignatur als Response. Das Prüfsystem verifiziert die vom Authentisierungstoken erhaltene Prüfsignatur.

Wahlweise wird, um die Signaturberechnung zu veranlassen - anstelle einer vom Prüfsystem berechneten Challenge -, ein vom Authentisierungstoken selbst bereitgestelltes Nonce verwendet, z.B. ein Zeitstempel oder ein ephemeraler öffentlicher Schlüssel, z.B. ein vom öffentlichen kryptographische Parameter (y, der im Authentisierungstoken abgespeichert ist) abgeleiteter ephemeraler öffentlicher kryptographischer Parameter. Hierdurch kann die Prüfsignatur "offline" berechnet werden, ohne dass das Authentisierungstoken Verbindung zum Prüfsystem benötigt. Eine solche Verbindung des Authentisierungstokens zum Prüfsystem ist erst zur Verifizierung der Prüfsignatur erforderlich.

Das Authentisierungstoken kann wahlweise gestaltet sein als: Hardware-Token wie z.B. USB-Token, elektronisches Ausweisdokument, oder als Software-Token. Das elektronische Ausweisdokument kann beispielsweise gestaltet sein als elektronischer Reisepass, elektronischer Führerschein, elektronischer Personalausweis oder Vergleichbares. Das Software-Token kann z.B. in einer gesicherten Laufzeitumgebung implementiert sein.

Im Folgenden wird die Erfindung an Hand von Ausführungsbeispielen und unter Bezugnahme auf die Zeichnung näher erläutert, in der zeigen:

Fig. 1    ein System umfassend ein Ausweisdokument und ein Prüfsystem, geeignet für das erfindungsgemäße Verfahren;

Fig. 2    ein schematisches Schaubild zur Darstellung der Authentisierung eines Ausweisdokuments im System aus Fig.1, nach einer Ausführungsform der Erfindung.

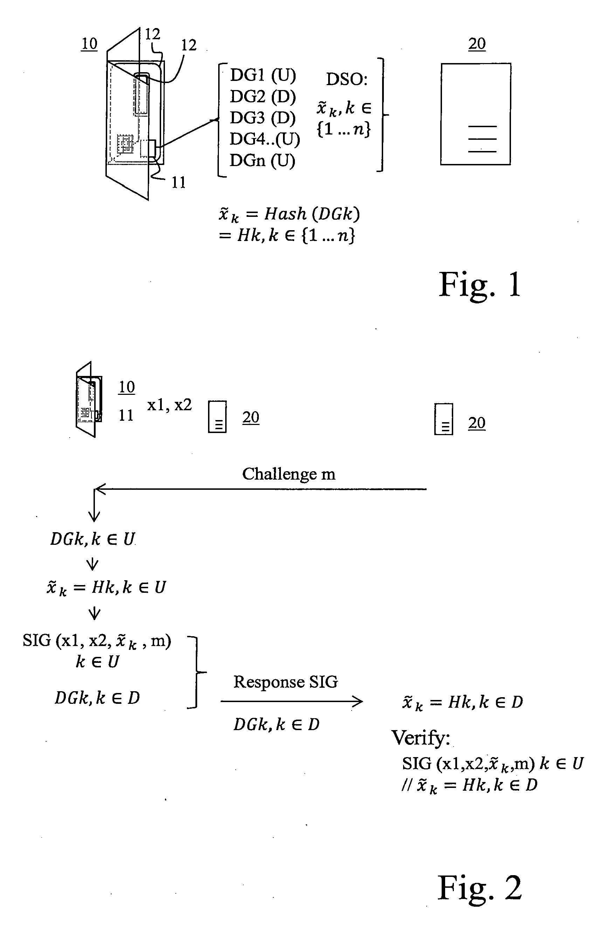

Fig.1 zeigt ein System umfassend, als Authentisierungstoken 10, ein Ausweisdokument 10, sowie ein Prüfsystem 20, geeignet für das erfindungsgemäße Verfahren. Das Ausweisdokument 10 ist beispielhaft als elektronischer Personalausweis gestaltet und umfasst einen kontaktlos auslesbaren Chip 11 und zumindest eine Antenne bzw. Spule 12 zur Kontaktierung des Chips 11 mittels des Prüfsystems. Das Prüfsystem 20 umfasst ein kontaktloses Lesesystem (nicht näher dargestellt), um mit dem Chip 11 des Ausweisdokuments 10 über die Antenne/Spule 12 kontaktlos zu kommunizieren. Im Chip sind n Datengruppen DG1, DG2, DG3, DG4, ... DGn und ein Data Security Object DSO abgespeichert. Im Data Security Object DSO ist zu jeder der Datengruppen $DGk, k \in \{1... n\}$ ein Hashwert $\tilde{x}_k = Hash\,(DGk)$ = $Hk, k \in \{1... n\}$ über die jeweilige Datengruppe abgespeichert. Im Zusammenhang mit der später anhand von Fig. 2 beschriebenen Erfindung sind die Datengruppen DG2 und DG3 als veröffentlicht D ("Disclosed") definiert, und die übrigen Datengruppen DG1, DG4, ... DGn sind als geheimgehalten U ("Undisclosed") definiert.

Zur passiven Authentisierung des Ausweisdokuments 10 nach dem Stand der Technik würde das Prüfsystem 20 aus dem Chip 11 alle Datengruppen DG1, DG2, DG3, DG4, ... DGn und das Data Security Object DSO mit den Hashwerten $\tilde{x}_k$ über die Datengruppen auslesen.

Fig. 3 zeigt ein schematisches Schaubild zur Darstellung der Authentisierung eines Ausweisdokuments 10 im System aus Fig.1, nach einer Ausführungsform der Erfindung, mittels einer vom Ausweisdokument 10 berechneten und vom Prüfsystem 20 verifizierten Prüfsignatur SIG. Gemäß Fig. 3 sind die beiden Datengruppen DG2, DG3 zu prüfen und als veröffentlichte Datengruppen $DGk, k \in D$ (k ist Element der Menge Disclosed D) definiert. Die Datengruppen GD1, DG4, ... DGn sind nicht zu prüfen und sind als geheimgehaltene Datengruppen $DGk, k \in U$ (k ist Element der Menge Undisclosed U) definiert.

Im Chip 11 des erfindungsgemäßen Ausweisdokuments 10 gemäß der anhand von Fig. 3 beschriebenen Ausführungsform sind zwei individuelle kryptographische Parameter x1 und x2 abgespeichert, die zur Berechnung der Prüfsignatur SIG verwendet werden. Der Parameter x1 ist ein zufälliger geheimer Exponent, x2 ein weiterer geheimer Wert, und x1 und x2 wurden während der Personalisierung in das Ausweisdokument 10 eingebracht. Der erste Parameter x1 wird zwingend für jedes Ausweisdokument individuell gewählt. Der zweite Parameter x2 wird von x1 abhängig festgelegt.

Zur Authentisierung sendet das Prüfsystem 20 an den Chip einen Challenge m (oder alternativ einen anderen Nonce). In Reaktion auf den Challenge berechnet der Chip 11 über die geheimgehaltenen Datengruppen $DGk, k \in D$ die Hashwerte $\tilde{x}_k = Hk, k \in D$ und aus den den geheimen Parametern x1, x2, den Hashwerten, dem Challenge m und weiteren Parametern (z.B. Zufallszahlen t, siehe weiter unten) die Prüfsignatur SIG. Der Chip 11 sendet die berechnete Prüfsignatur SIG und die veröffentlichten Datengruppen $DGk, k \in D$ in einem Response an das Prüfsystem 20. Das Prüfsystem empfängt die Prüfsignatur SIG und die veröffentlichten Datengruppen $DGk, k \in D$ und verifiziert mittels der veröffentlichten Datengruppen $DGk, k \in D$ die über die geheimgehaltenen Datengruppen gebildete Prüfsignatur SIG. Hierbei werden in einem einzigen Verifizierungsschritt sowohl die veröffentlichten als auch die geheimgehaltenen Datengruppen verifiziert.

Im Ausweisdokument 10 sind n Datengruppen $DGk, k \in \{1... n\}$ gespeichert. Während der Herstellung des Ausweisdokuments legt der Identitätsprovider (z.B. BSI TR-03110 "Document Signer") die Systemparameter des später zur Authentisierung zu verwendenden kryptographischen Systems fest. Als kryptographisches System, dessen Systemparameter festgelegt werden, wird eine Gruppe verwendet, auf der das Diskrete-Logarithmen-Problem schwer ist. Ein Beispiel für eine solche Gruppe ist eine elliptische Kurve.

Implementierungsmöglichkeit mit Schnorr-Signatur.

Im Folgenden wird eine detaillierte Implementierungsmöglichkeit des erfindungsgemäßen Verfahrens der quasi-passiven Authentisierung beschrieben, bei der als Prüfsignatur SIG eine Schnorr-Signatur verwendet wird.

Bei der Berechnung der Prüfsignatur SIG werden Algorithmen über einer Gruppe verwendet, z.B. elliptischen Kurve, mit Generatorpunkt $g_1$. Für Gruppenoperationen auf der Gruppe / elliptischen Kurve wird im Folgenden durchgängig die multiplikative Schreibweise verwendet.

Als Systemparameter berechnet der Identitätsprovider insbesondere n+1 geheime Exponenten $z, \tilde{z}_k : k \in \{1 \dots n\}$ und die zugehörigen Punkte auf der Gruppe / elliptischen Kurve

$$g_1$$

$$g_2 = g_1{}^z$$

$$\tilde{g}_k = g_1{}^{\tilde{z}_k}, k \in \{1 \dots n\}$$

Nun wird die Personalisierung des Ausweisdokuments durchgeführt.

Bei der Personalisierung wählt der Identitätsprovider für eine ganze Mehrzahl, z.B. eine Charge, von Ausweisdokumenten einen (gemeinsamen) geheimen Exponenten x und berechnet den zugehörigen Punkt $y = g_1{}^x$ auf der Gruppe / elliptischen Kurve.

Der Identitätsprovider wählt für jedes individuelle Ausweisdokument 10 aus der Mehrzahl / Charge einen zufälligen geheimen Exponenten $x_1$, welcher auch im Chip 11 des Ausweisdokuments 10 abgespeichert wird. Nachfolgend wir nur noch ein einzelnes Ausweisdokument 10 aus der Mehrzahl / Charge betrachtet. Der Identitätsprovider berechnet für jede der Datengruppen $DGk, k \in \{1 \dots n\}$ des Ausweisdokuments 10 den Hashwert $\tilde{x}k = Hash\,(DGk) = Hk, k \in \{1 \dots n\}$. Weiter berechnet der Identitätsprovider den geheimen Wert $x_2$ über die Gleichung

$$x_1 + x_2 z + \sum_{k=1}^{n} \tilde{x}_k \tilde{z}_k = x \quad (*)$$

Der Wert $x_2$ wird ebenfalls im Chip 11 des Ausweisdokuments 10 abgespeichert.

Die Punkte $y, g_1, g_2, \tilde{g}_k, k \in \{1 \dots n\}$ auf der Gruppe / elliptischen Kurve veröffentlicht der Identitätsprovider in Form eines signierten Zertifikats CERT $(y, g_1, g_2, \tilde{g}_k, k \in \{1 \dots n\})$, indem er das Zertifikat CERT () auslesbar im Chip 11 des Ausweisdokuments 10 abspeichert. Das Zertifikat CERT kann beispielsweise als X.509 Zertifikat gestaltet sein. Durch Exponentiation des Generatorpunkts $g_1$ mit der Gleichung (*) ergibt sich folgende Gleichung:

$$g_1{}^{x_1} g_2{}^{x_2} \prod_{k \in \{1 \dots n\}} \tilde{g}_k{}^{\tilde{x}_k} = y \quad (**)$$

Gleichung (**) ist die Diskrete Logarithmen Repräsentation DLREP von y.

Durch das Wertepaar (x1, x2) ist ein geheimer, privater kryptographischer Parameter-Satz eines asymmetrischen Kryptosystems gebildet, der für jedes Ausweisdokument 10 individuell ist (da x1 individuell ist). Der Punkt y ist der öffentliche kryptographische Parameter zum privaten kryptographischen Parameter-Satz (x1, x2) im asymmetrischen Kryptosystem. Im Unterschied zu (x1, x2) ist der öffentliche Parameter y für alle Ausweisdokumente 10 der Mehrzahl / Charge identisch.

Im Folgenden wird ein Authentisierungsvorgang betrachtet, bei dem nur ein Teil der Datengruppen $DGk, k \in \{1 \dots n\}$ zu authentisieren ist. Ein solcher Vorgang könnte beispielsweise beim Altersnachweis an einem Verkaufsautomaten vorliegen, bei dem nur das Alter überprüft wird. Ein weiteres mögliches Beispiel ist die anonyme Überprüfung der Zutrittsberechtigung zu einem Sperrbereich für Bewohner des Sperrbereichs. In diesem Fall würden nur Wohnort und Adresse geprüft, nicht aber Name, Alter, Geschlecht, biometrische Daten etc.

Gemäß dem Prinzip der Datensparsamkeit sollen bei einer Authentisierung nur die unbedingt nötigen Datengruppen angezeigt werden. Gemäß der Erfindung werden daher die Datengruppen in veröffentlichte Datengruppen der Menge D (Disclosed)

$$DGk, k \in D \; mit \; D \subseteq \{1 \dots n\} \quad (\text{Menge D})$$

und geheimgehaltene Datengruppen der Menge U (Undisclosed)

$$DGk, k \in U \; mit \; U = \{1 \dots n\} \backslash D \quad (\text{Menge U})$$

eingeteilt.

Mit der Einteilung der Datengruppen in die Mengen D und U lässt sich die DLREP Gleichung (\*\*) umformen zu

$$g_1^{x_1} \, g_2^{x_2} \prod_{k \in U} \tilde{g}_k^{\tilde{x}_k} = y \cdot \left( \prod_{k \in D} \tilde{g}_k^{\tilde{x}_k} \right)^{-1} \quad (\text{***})$$

Die Berechnung einer als verallgemeinerter Schnorr-Signatur gestalteten Prüfsignatur SIG wird mit den folgenden Schritten durchgeführt:

wähle Zufallszahlen: $t_1, t_2, \tilde{t}_k, \; k \in U$

$$\text{berechne: } c = Hash \left( g_1^{t_1} \, g_2^{t_2} \prod_{k \in U} \tilde{g}_k^{\tilde{t}_k}, m \right)$$

$$\text{berechne: } s_1 = t_1 - c \, x_1$$

$$\text{berechne: } s_2 = t_2 - c \, x_2$$

$$\text{berechne: } \tilde{s}_k = \tilde{t}_k - c \, \tilde{x}_k, \; k \in U$$

$$\text{berechne: } SIG = c, s_1, s_2, \tilde{s}_k, \; k \in U$$

Der Chip 11 sendet die berechnete Prüfsignatur SIG, die veröffentlichten Datengruppen und das Zertifikat CERT () an das Prüfsystem 20. Das Prüfsystem verifiziert zuerst das Zertifikat CERT ($y, g_1, g_2, \tilde{g}_k, k \in \{1 \dots n\}$). Danach berechnet das Prüfsystem die Hashwerte über die veröffentlichten Daten-gruppen $\tilde{x}_k = Hash (DGk) = Hk, k \in D$. Mittels der berechneten Hashwerte über die veröffentlichten Datengruppen, $\tilde{x}_k = Hash (DGk) = Hk, k \in D$ verifiziert das Prüf-system 20 die Prüfsignatur, indem das Prüfsystem 20 die folgenden Rechenschritte durchführt:

Prüfsignaturverifizierung verallgemeinerte Schnorr-Signatur:

$$\text{berechne: } \delta = y \cdot \left( \prod_{k \in D} \tilde{g}_k^{\tilde{x}_k} \right)^{-1}$$

$$\text{verifiziere: } c = Hash \left( g_1^{s_1} \, g_2^{s_2} \prod_{k \in U} \tilde{g}_k^{\tilde{s}_k} \cdot \delta^c, m \right).$$

Ist c erfolgreich verifiziert, sind alle Datengruppen authentisiert. Damit ist das Ausweisdokument 10 authentisiert.

Implementierungsmöglichkeit mit pseudonymer Signatur.

Im Folgenden wird eine detaillierte Implementierungsmöglichkeit des erfindungsgemäßen Verfahrens beschrieben, bei der als Prüfsignatur eine pseudonyme Signatur verwendet wird, wie sie im Fachartikel von Bender et al. angegeben ist. Die Grundstruktur der pseudonymen Signatur ist die der Schnorr-Signatur. Wie bei der Schnorr-Signatur-Ausführungsform beschrieben werden Systemparameter und ein chargenspezifischer geheimer Exponent festgelegt. Weiter wird bei der Personalisierung durch den Identitätsprovider für jedes individuelle Ausweisdokument 10 der Charge ein zufälliger geheimer Exponenten $x_1$ festgelegt. Zusätzlich wird bei der Pseudonymen-Signatur-Ausführungsform für jedes Ausweisdokument 10 ein Public-Private-Key-Paar mit einem privaten Exponenten gsk und einem öffentlichen Exponenten dpk erzeugt. Mittels des zusätzlichen öffentlichen Exponenten dpk und des zufälligen geheimen Exponenten $x_1$ wird ein Pseudonym $dsnym = dpk^{x_1}$ berechnet, das bei der Authentisierung zu verifizieren ist. Jedem Ausweisdokument 10 wird somit ein Pseudonym zugeordnet.

Die Berechnung der Prüfsignatur SIG in Form einer pseudonymen Signatur erfolgt folgendermaßen. Die Prüfsignatur SIG wird beispielsweise, wie bei der Schnorr-Signatur-Ausführungsform beschrieben, im Challenge-Response-Verfahren von Chip 11 an das Prüfsystem 20 übertragen.

Prüfsignaturberechnung pseudonyme Signatur:

$$\text{wähle Zufallszahlen: } t_1, t_2, \tilde{t}_k, \; k \in U$$

$$\text{berechne: } dsnym = dpk^{x_1}$$

$$\text{berechne: } c = Hash\left(g_1^{t_1} \, g_2^{t_2} \, \textstyle\prod_{k \in U} \tilde{g}_k^{\tilde{t}_k}, dpk^{t_1}, m, dpk, dsnym\right)$$

$$\text{berechne: } s_1 = t_1 - c\,x_1$$

$$\text{berechne: } s_2 = t_2 - c\,x_2$$

$$\text{berechne: } \tilde{s}_k = \tilde{t}_k - c\,\tilde{x}_k, \; k \in U$$

$$\text{berechne: } SIG = c, s_1, s_2, \tilde{s}_k, \; k \in U$$

$$\text{setze: zu verifizierendes Pseudonym} = dsnym$$

Die hier beschriebene Signatur SIG ist eine pseudonyme Signatur basierend auf dem Grundgerüst einer Schnorr-Signatur.

Das Prüfsystem 20 berechnet, wie bei der Schnorr-Ausführungsform, die Hashwerte $\tilde{x}_k = Hash\,(DGk) = Hk$, $k \in D$ der veröffentlichten D Datengruppen und verifiziert damit die pseudonyme Signatur SIG durch folgende Schritte.

Prüfsignaturverifizierung pseudonyme Signatur:

$$\text{berechne: } \delta = y \cdot \left(\textstyle\prod_{k \in D} \tilde{g}_k^{\tilde{x}_k}\right)^{-1}$$

$$\text{verifiziere: }$$

$$c = Hash\left(g_1^{s_1} \, g_2^{s_2} \, \textstyle\prod_{k \in U} \tilde{g}_k^{\tilde{s}_k} \cdot \delta^c, dpk^{s_1} \cdot dsnym^c, m, dpk, dsnym\right).$$

Da in den Hashwert c das Pseudonym eingeht, werden Hashwerte c, die mit einem gesperrten (auf einer "Blacklist" gelisteten) Pseudonym berechnet wurden, automatisch als fehlerhaft verworfen. Das Ausweisdokument 10 wird in diesem Fall als nicht erfolgreich authentisiert eingestuft. So lassen sich auf effiziente Weise einzelne Ausweisdokumente 10 sperren. Durch ein Entfernen des Pseudonyms von der Blacklist lässt sich das Ausweisdokument 10 wieder entsperren.

**Patentansprüche**

1. Verfahren zur Authentisierung eines elektronischen Authentisierungstokens (10) gegenüber einem Prüfsystem (20), wobei das Authentisierungstoken enthält:

   - mehrere Datengruppen (DG1, ... DGn) mit zur Authentisierung vorgesehenen Authentisierungsdaten,
   - mindestens einen für jedes Authentisierungstoken individuellen geheimen kryptographischen Parameter (x1) eines asymmetrischen Kryptosystems, das den geheimen kryptographischen Parameter (x1) und einen entsprechenden öffentlichen kryptographischen Parameter (y) umfasst;

   wobei bei dem Verfahren:

   a) die Datengruppen (DG1, ...DGn) in veröffentlichte (D) und geheimgehaltene (U) Datengruppen aufgeteilt werden,
   b) die veröffentlichten Datengruppen (DG2, DG3; $DGk, k \in D$) an das Prüfsystem (20) übertragen werden, **dadurch gekennzeichnet, dass**
   c) alle Datengruppen (DG1, ... DGn) mittels eines Zero-Knowledge-Beweises authentisiert werden, ohne dass die geheimgehaltenen Datengruppen (DG1, DG4, DG5; $DGk, k \in U$) selbst oder Information, die Rückschlüsse auf die Datengruppen (DG1, DG4, DG5; $DGk, k \in U$) ermöglicht, insbesondere Hashwerte (H1, H4, H5; $\tilde{x}_k, k \in U$) über die Datengruppen (DG1, DG4, DG5; $DGk, k \in U$), an das Prüfsystem (20) übertragen werden; und der öffentliche kryptographische Parameter (y) für eine Mehrzahl von Authentisierungstoken identisch ist.

2. Verfahren nach Anspruch 1, wobei für den Zero-Knowledge-Beweis c) :

   c1) durch das Authentisierungstoken (10) unter Verwendung der Datengruppen (DG1, ... DGn) eine Prüfsignatur (SIG) berechnet wird,
   c2) die Prüfsignatur (SIG) an das Prüfsystem (20) übertragen wird, und
   c3) die Prüfsignatur (SIG) beim Prüfsystem (20) verifiziert wird.

3. Verfahren nach Anspruch 2, wobei zur Berechnung und Verifizierung der Prüfsignatur (SIG) Systemparameter eines der Prüfsignatur (SIG) zu Grunde gelegten kryptographischen Systems festgelegt werden, wobei für die Mehrzahl von Authentisierungstoken (10) identische Systemparameter festgelegt werden.

4. Verfahren nach Anspruch 2 oder 3, wobei in c3) die Prüfsignatur (SIG) beim Prüfsystem (20) unter Verwendung der veröffentlichten Datengruppen (DG2, DG3; $DGk, k \in D$) verifiziert wird.

5. Verfahren nach einem der Ansprüche 2 bis 4, wobei die Prüfsignatur als Schnorrsignatur oder verallgemeinerte Schnorrsignatur gestaltet ist.

6. Verfahren nach einem der Ansprüche 2 bis 4, wobei die Prüfsignatur als pseudonyme Signatur gestaltet ist.

7. Elektronisches Ausweisdokument, eingerichtet für ein Verfahren zur Authentisierung nach einem der Ansprüche 1 bis 6.

8. Hardware-Token, insbesondere USB-Token, eingerichtet für ein Verfahren zur Authentisierung nach einem der Ansprüche 1 bis 6.

9. Software-Token, insbesondere in einer gesicherten Laufzeitumgebung eingerichtetes Software-Token, eingerichtet für ein Verfahren zur Authentisierung nach einem der Ansprüche 1 bis 6.

$$\tilde{x}_k = Hash\,(DGk)$$
$$= Hk, k \in \{1 \dots n\}$$

Fig. 1

Fig. 2

Europäisches
Patentamt

European
Patent Office

Office européen
des brevets

**EUROPÄISCHER RECHERCHENBERICHT**

Nummer der Anmeldung

EP 15 00 2040

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | Stefan Brands: "A Technical Overview of Digital Credentials", , 20. Februar 2002 (2002-02-20), XP055004420, Gefunden im Internet: URL:http://www.credentica.com/overview.pdf [gefunden am 2011-08-09] * Seiten 6-12 * ----- | 1-9 | INV. H04L9/32 |
| Y,D | JENS BENDER ET AL: "Domain-Specific Pseudonymous Signatures for the German Identity Card", 19. September 2012 (2012-09-19), INFORMATION SECURITY, SPRINGER BERLIN HEIDELBERG, BERLIN, HEIDELBERG, PAGE(S) 104 - 119, XP047016711, ISBN: 978-3-642-33382-8 * Seiten 104-106 * * Seite 114 * ----- | 1-9 | |
| A | US 2013/276084 A1 (CANARD SEBASTIEN [FR] ET AL) 17. Oktober 2013 (2013-10-17) * Absätze [0005], [0077] - [0079] * * Absätze [0134], [0137] - [0141] * ----- | 1-9 | RECHERCHIERTE SACHGEBIETE (IPC)<br>H04L |
| A | JULIEN BRINGER ET AL: "Efficient and Strongly Secure Dynamic Domain-Specific Pseudonymous Signatures for ID Documents", INTERNATIONAL ASSOCIATION FOR CRYPTOLOGIC RESEARCH,, Bd. 20140203:103431, 3. Februar 2014 (2014-02-03), Seiten 1-28, XP061015463, [gefunden am 2014-02-03] * sections 3.1, 3.2; Seiten 3, 11-14; Abbildung 2 * ----- | 1-9 | |

-/--

Der vorliegende Recherchenbericht wurde für alle Patentansprüche erstellt

| Recherchenort | Abschlußdatum der Recherche | Prüfer |
|---|---|---|
| München | 30. November 2015 | Horbach, Christian |

EPO FORM 1503 03.82 (P04C03)

Europäisches
Patentamt
European
Patent Office
Office européen
des brevets

**EUROPÄISCHER RECHERCHENBERICHT**

Nummer der Anmeldung

EP 15 00 2040

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2013/007686 A1 (BUNDESREP DEUTSCHLAND [DE]; KUEGLER DENNIS [DE]) 17. Januar 2013 (2013-01-17) * Seite 12 - Seite 14 * ----- | 1-9 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 30. November 2015 | Horbach, Christian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 00 2040

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-11-2015

| Im Recherchenbericht angeführtes Patentdokument | Datum der Veröffentlichung | Mitglied(er) der Patentfamilie | Datum der Veröffentlichung |
|---|---|---|---|
| US 2013276084 A1 | 17-10-2013 | EP 2656538 A1<br>FR 2969879 A1<br>US 2013276084 A1<br>WO 2012085425 A1 | 30-10-2013<br>29-06-2012<br>17-10-2013<br>28-06-2012 |
| WO 2013007686 A1 | 17-01-2013 | EP 2730050 A1<br>WO 2013007686 A1 | 14-05-2014<br>17-01-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0384475 B1

**In der Beschreibung aufgeführte Nicht-Patentliteratur**

- **BENDER ; J. BENDER ; Ö. DAGDELEN ; M. FISCHLIN ; D. KÜGLER et al.** *Domain-Specific Pseudonymous Signatures for the German Identity Card, http//eprint.iacr.org/2012/558*